# EUROPÄISCHE PATENTSCHRIFT

(11) **EP 3 116 928 B1**
(45) Veröffentlichungstag und Bekanntmachung des Hinweises auf die Patenterteilung: **31.01.2018**
(21) Anmeldenummer: 15711444.8
(22) Anmeldetag: 10.03.2015
(51) Int. Cl.: C08G 18/63, C08G 18/65, C08G 18/76, C08G 18/80, C08G 18/08, C08G 18/12, C08G 18/22, C09D 175/08, C08G 18/32

(54) **LÖSEMITTELFREIE POLYURETHAN-FLÜSSIGFOLIE**
SOLVENT-FREE POLYURETHANE LIQUID FILM
FILM LIQUIDE EN POLYURÉTHANE SANS SOLVANT

(30) Priorität: 11.03.2014 EP 14158951
(43) Veröffentlichungstag der Anmeldung: 18.01.2017
(73) Patentinhaber: Sika Technology AG, 6340 Baar (CH)
(72) Erfinder: HÄBERLE, Hans, 78262 Gailingen (DE); BURCKHARDT, Urs, CH-8049 Zürich (CH); STADELMANN, Ursula, CH-8046 Zürich (CH)
(74) Vertreter: Sika Patent Attorneys
(86) Internationale Anmeldenummer: PCT/EP2015/054970
(87) Internationale Veröffentlichungsnummer: WO 2015/135944

(56) Entgegenhaltungen:
- US-A1- 2009 099 333

## Beschreibung

### Technisches Gebiet

Die Erfindung betrifft eine bei Raumtemperatur flüssig applizierbare reaktive Polyurethan-Zusammensetzung, welche insbesondere als Beschichtung zum Abdichten von Bauwerken gegen eindringendes Wasser einsetzbar ist.

### Stand der Technik

Flüssig applizierbare reaktive Polyurethan-Zusammensetzungen, welche als rissüberbrückende Beschichtungen zum Abdichten von Bauwerken gegen eindringendes Wasser eingesetzt werden, sind seit längerem Stand der Technik; sie werden auch als Flüssigfolien bezeichnet. Gegenüber vorgefertigten Polymerbahnen bieten sie eine einfachere Applikation, insbesondere bei unebenen oder geometrisch komplexen Oberflächen, einen besseren Hinterlaufschutz aufgrund der vollflächigen Haftung zum Untergrund sowie eine nahtlose Verlegung. Gegenüber nicht-reaktiven flüssig applizierten Systemen wie Polymerlösungen, wässrigen Polymerdispersionen oder Produkten auf Bitumenbasis zeichnen sie sich durch eine hohe Festigkeit und eine gute Elastizität, auch in der Kälte, aus, schmutzen wenig an und dichten auch unter stehendem Wasser dauerhaft ab.

Um Bauwerke zuverlässig gegen eindringendes Wasser zu schützen sind die rissüberbrückenden Eigenschaften einer ausgehärteten Flüssigfolie über einen weiten Temperaturbereich wichtig. Dazu sollte das ausgehärtete Material über eine hohe Dehnbarkeit, eine hohe Festigkeit und eine gute Weiterreissfestigkeit verfügen. Ein eher tiefer Wert für das Elastizitätsmodul (E-Modul) ist dabei vorteilhaft, so dass im Falle von Bewegungen, verursacht beispielsweise durch Temperaturschwankung oder Schwingungen im Bauwerk, keine allzu grossen Spannungen in der Folie aufgebaut werden, die ein Ablösen der Folie vom Untergrund oder einen Kohäsivbruch im Untergrund zur Folge haben können. Letzteres ist vor allem bei wenig druckfesten Untergründen wie beispielsweise Isolierschaum kritisch.

Unter den Polyurethan-Flüssigfolien gibt es sowohl einkomponentige als auch zweikomponentige Systeme. Einkomponentige Polyurethan-Flüssigfolien härten mittels Feuchtigkeit von aussen nach innen und benötigen damit eine relativ lange Zeit, um vollständig durchzuhärten, insbesondere bei dickschichtiger Anwendung, Trockenheit oder eingeschränktem Zutritt von Feuchtigkeit, was für nachfolgende Arbeitsgänge nachteilig ist. Handelsübliche Produkte enthalten zudem einen beträchtlichen Gehalt an flüchtigen organischen Lösemitteln, einerseits um ihre Haltbarkeit zu erhöhen und andererseits um die Viskosität zu senken und somit die Verarbeitbarkeit zu verbessern. Dadurch weisen sie geruchlich stark wahrnehmbare VOC-Emissionen und einen gewissen Schwund auf.

Zweikomponentige Polyurethan-Flüssigfolien sind demgegenüber auch bei hohem Feststoffgehalt vergleichsweise niedrigviskos und lassen sich dadurch einfach applizieren, und sie härten auch in grösseren Schichtstärken rasch durch. Sie reagieren in der Aushärtung allerdings sehr empfindlich auf Feuchtigkeit und Temperatur. Bei hoher Luftfeuchtigkeit, insbesondere in Kombination mit hohen Temperaturen, bei Substratfeuchtigkeit oder direkter Wasserbeaufschlagung kann es zu Blasenbildung durch CO₂-Entwicklung kommen, welche die Beschichtung aufschäumen lässt und deren Abdichtungsfunktion und Beständigkeit beeinträchtigt; bei warmen Bedingungen zeigen sie eine knappe Offenzeit, und in der Kälte härten sie sehr langsam aus oder bleiben dauerhaft weich und klebrig. Ausserdem enthalten viele zweikomponentige Produkte nach dem Stand der Technik noch immer Lösemittel und/oder flüchtige Isocyanate und sind dadurch aus Gründen des Umwelt- und Gesundheitsschutzes nachteilig.

### Darstellung der Erfindung

Aufgabe der vorliegenden Erfindung ist es daher, eine lösemittelfreie, geruchsarme Polyurethanzusammensetzung ohne flüchtige Isocyanate zur Verfügung zu stellen, welche sich als zweikomponentige Flüssigfolie zur Bauwerksabdichtung eignet und über eine lange Haltbarkeit der Komponenten, eine ausgezeichnete Verarbeitbarkeit bei Handapplikation, eine rasche und störungsfreie Aushärtung in einem breiten Temperatur- und Feuchtigkeitsbereich und eine gute Witterungsbeständigkeit verfügt.

Überraschenderweise wurde gefunden, dass eine Zusammensetzung nach Anspruch 1 diese Aufgabe löst. Sie ist frei von Lösemitteln, flüchtigen Isocyanaten wie TDI oder IPDI und geruchsintensiven Stoffen, und sie verfügt über eine lange Offenzeit bei sehr niedriger Viskosität, wodurch sie von Hand hervorragend applizierbar ist. Die Kombination aus Polymer-Polyol, Diol-Kettenverlängerer und geruchsarmem bis geruchlosem Aldimin in Kombination mit nichtflüchtigem MDI in der zweiten Komponente ermöglicht eine sehr niedrige Viskosität bei langer Offenzeit, eine ausgezeichnete Durchhärtung mit kaum Blasenbildung, hervorragende mechanische Eigenschaften mit hoher Festigkeit und Dehnbarkeit bei tiefem E-Modul und eine gute Witterungsstabilität des ausgehärteten Materials.

Besonders überraschend ist dabei der Umstand, dass die Zusammensetzung trotz des hochreaktiven MDI und des Diol-Kettenverlängerers eine lange Offenzeit aufweist und weitgehend blasenfrei aushärtet und zudem sehr gute mechanische Eigenschaften entwickelt, obwohl der weichmachende Aldehyd in der Zusammensetzung verbleibt.

Besonders überraschend ist weiterhin, dass durch das Polymer-Polyol die Zugfestigkeit der Zusammensetzung deutlich erhöht wird, wobei das E-Modul entweder nur unwesentlich ansteigt, ungefähr gleich bleibt oder sogar sinkt, was für Applikatonen auf wenig druckfesten Untergründen wie zum Beispiel Isolierschäumen besonders vorteilhaft ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus einer ersten Komponente enthaltend
- mindestens ein Polymer-Polyol, welches eine Dispersion eines bei Raumtemperatur festen Polymers in einem bei Raumtemperatur flüssigen Polyetherpolyol ist,
- mindestens einen Diol-Kettenverlängerer
- und gegebenenfalls weitere Polyole; und einer zweite Komponente enthaltend Diphenylmethandiisocyanat; wobei mindestens eine der beiden Komponenten zusätzlich mindestens ein Aldimin der Formel (I) enthält, 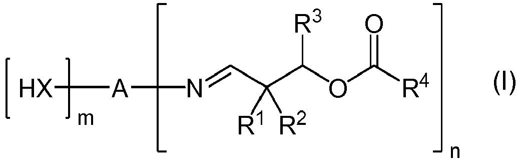 wobei
   A für einen (m+n)-wertigen, gegebenenfalls Ethereinheiten enthaltenden, Kohlenwasserstoff-Rest mit 2 bis 20 C-Atomen steht,
   X für O oder N-R⁵ steht,
   R¹ und R² unabhängig voneinander jeweils für einen einwertigen Kohlenwasserstoff-Rest mit 1 bis 12 C-Atomen stehen, oder zusammen für einen zweiwertigen Kohlenwasserstoff-Rest mit 4 bis 12 C-Atomen stehen, welcher Teil eines, gegebenenfalls substituierten, carbocyclischen Rings mit 5 bis 8, bevorzugt 6, C-Atomen ist;
   R³ für ein Wasserstoffatom oder für einen Alkyl- oder Arylalkyl- oder Alkoxycarbonyl-Rest mit 1 bis 12 C-Atomen steht;
   R⁴ für einen einwertigen, gegebenenfalls Ether- oder Aldehydeinheiten enthaltenden Kohlenwasserstoff-Rest mit 6 bis 20 C-Atomen steht;
   R⁵ für einen einwertigen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder eine Gruppe der Formel 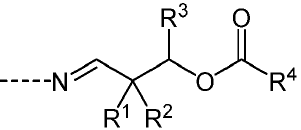 aufweist; und
   m für 0 oder 1 und n für 1 oder 2 oder 3 steht, mit der Massgabe, dass m+n für 2 oder 3 steht.

Als "Diol-Kettenverlängerer" wird ein organisches Diol bezeichnet, welches kein Polymer darstellt.

Als "Diphenylmethandiisocyanat" oder abgekürzt "MDI" werden alle isomeren Formen von Diphenylmethandiisocyanat und beliebige Mischungen davon bezeichnet, insbesondere Diphenylmethan-4,4'-diisocyanat, Diphenylmethan-2,4'-diisocyanat und Diphenylmethan-2,2'-diisocyanat.

Eine gestrichelte Linie in den Formeln in diesem Dokument stellt jeweils die Bindung zwischen einem Substituenten und dem zugehörigen Molekülrest dar. Als "primäre Hydroxylgruppe" wird eine OH-Gruppe bezeichnet, welche an ein C-Atom mit zwei Wasserstoffen gebunden ist.

Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.

Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von ca. 23 °C bezeichnet.

Die erste Komponente der Zusammensetzung enthält mindestens ein Polymer-Polyol, welches eine Dispersion eines bei Raumtemperatur festen Polymers in einem bei Raumtemperatur flüssigen Polyetherpolyol ist.

Das feste Polymer weist bevorzugt eine mittleren Teilchengrösse von höchstens 5 µm auf. Die mittlere Teilchengrösse liegt besonders bevorzugt unterhalb von 2 µm, insbesondere im Bereich von 0.1 bis 1 µm.

Geeignete Polymer-Polyole sind Polyetherpolyole enthaltend Polymere und/oder Copolymere vinylischer Monomere wie insbesondere Acrylnitril, Styrol, α-Methylstyrol, Methyl(meth)acrylat oder Hydroxyethyl(meth)acrylat, sowie Polyharnstoffe bzw. Polyhydrazodicarbonamide (PHD) oder Polyurethane, wobei die beiden Phasen eine stabile, lagerfähige Dispersion bilden und das Polymer partiell auf das Polyetherpolyol gepfropft beziehungsweise kovalent ans Polyetherpolyol gebunden sein kann.

Bevorzugt sind Polymer-Polyole, bei welchen das feste Polymer ein Copolymer von Acrylnitril und Styrol (SAN) oder ein Polyharnstoff bzw. Polyhydrazodicarbonamid (PHD) oder ein Polyurethan ist. Diese Polymer-Polyole sind besonders gut herstellbar und lagerfähig. Ganz besonders bevorzugt ist SAN. Dieses ist besonders hydrophob und somit vorteilhaft in Kombination mit Isocyanaten.

Das Polyetherpolyol des Polymer-Polyols ist bevorzugt ein Polyoxyalkylenpolyol, welches durch ringöffnende Polymerisation von Oxiranen, insbesondere Ethylenoxid und/oder 1,2-Propylenoxid, mit Hilfe eines Startermoleküls mit zwei oder mehreren aktiven Wasserstoffatomen, insbesondere Wasser, Glykole wie 1,2-Ethandiol, 1,2- und 1,3-Propandiol, Neopentylglykol, Diethylenglykol, Triethylenglykol, Polyethylenglykole, Dipropylenglykol, Tripropylenglykol oder Polypropylenglykole, oder Triole, insbesondere Glycerin oder 1,1,1-Trimethylolpropan, oder Zuckeralkohole, insbesondere Sorbit (D-Glucitol), oder Diphenole, insbesondere Bisphenol A, oder Amine, insbesondere Ammoniak, Ethylendiamin oder Anilin, oder einer Mischung davon, hergestellt ist.

Besonders bevorzugt ist es ein Polyoxyalkylenpolyol, insbesondere ein Polyoxypropylenpolyol oder ein Ethylenoxid-terminiertes ("EO-endcapped") Polyoxypropylenpolyol.

Das Polyetherpolyol des Polymer-Polyols weist bevorzugt ein Molekulargewicht im Bereich von 400 bis 8000 g/mol, insbesondere 1000 bis 6000 g/mol, auf.

Das Polyetherpolyol des Polymer-Polyols weist bevorzugt eine mittlere OH-Funktionalität im Bereich von 1.75 bis 3.5, insbesondere 2.25 bis 3.0, auf.

Am meisten bevorzugt ist das Polyetherpolyol des Polymer-Polyols ein Ethylenoxid-terminiertes Polyoxypropylentriol mit einem Molekulargewicht im Bereich von1000 bis 6000 g/mol. Ein solches Polymer-Polyol verfügt vorwiegend über primäre Hydroxylgruppen, ist relativ hydrophob und weist eine OH-Funktionalität von mehr als 2 auf, wodurch es besonders geeignet ist für die Kombination mit Isocyanaten.

Das Polymer-Polyol kann aus beliebigen Kombinationen der genannten festen Polymere und der genannten Polyetherpolyole bestehen.

Ein ganz besonders bevorzugtes Polymer-Polyol ist ein Ethylenoxid-terminiertes Polyoxypropylentriol mit einem Molekulargewicht im Bereich von1000 bis 6000 g/mol enthaltend ein SAN-Polymer.

Das Polymer-Polyol weist bevorzugt einen Gehalt an festem Polymer im Bereich von 10 bis 50 Gewichts-% auf.

Als Polymer-Polyol bevorzugt sind kommerziell erhältliche Typen, welche vor allem für die Herstellung von Polyurethan-Weichschäumen verwendet werden, insbesondere die SAN-Polyole Lupranol® 4003/1, Lupranol® 4006/1/SC10, Lupranol® 4006/1/SC15, Lupranol® 4006/1/SC25, Lupranol® 4010/1/SC10, Lupranol® 4010/1/SC15, Lupranol® 4010/1/SC25, Lupranol® 4010/1/SC30 oder Lupranol® 4010/1/SC40 (alle von BASF), Desmophen® 5027 GT oder Desmophen® 5029 GT (beide von Bayer MaterialScience), Voralux® HL106, Voralux® HL108, Voralux® HL109, Voralux® HL120, Voralux® HL400, Voralux® HN360, Voralux® HN370, Voralux® HN380 oder Specflex® NC 700 (alle von Dow), Caradol® SP27-25, Caradol® SP30-15, Caradol® SP30-45, Caradol® SP37-25, Caradol® SP42-15, Caradol® SP44-10 oder Caradol® MD22-40 (alle von Shell), sowie das PHD-Polyol Desmophen® 5028 GT (von Bayer MaterialScience). Davon besonders bevorzugt sind die SAN-Polyole, insbesondere die genannten kommerziell erhältlichen Typen.

Die erste Komponente der Zusammensetzung enthält weiterhin mindestens einen Diol-Kettenverlängerer.

Bevorzugt stellt der Diol-Kettenverlängerer ein aliphatisches oder cycloaliphatisches Diol mit einem Molekulargewicht im Bereich von 60 bis 200 g/mol dar. Bevorzugt enthält der Diol-Kettenverlängerer mindestens eine primäre Hydroxylgruppe.

Geeignete Diol-Kettenverlängerer sind ausgewählt aus der Gruppe bestehend aus 1,2-Ethandiol, 1,2-Propandiol, 1,3-Propandiol, 1,2-Butandiol, 1,3-Butandiol, 1,4-Butandiol, 2,3-Butandiol, 2-Methyl-1,3-propandiol, 1,5-Pentandiol, 1,2-Pentandiol, 2,4-Pentandiol, 2-Methyl-1,4-pentandiol, 2,2-Dimethyl-1,3-propandiol (Neopentylglykol), 1,6-Hexandiol, 1,2-Hexandiol, 3-Methyl-1,5-pentandiol, 1,8-Octandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol, 1,4-Cyclohexandimethanol, Diethylenglykol und Dipropylenglykol.

Davon besonders bevorzugt sind bei Raumtemperatur flüssige Typen mit primären OH-Gruppen, insbesondere 1,2-Ethandiol, 1,3-Propandiol, 1,4-Butandiol, 2-Methyl-1,3-propandiol, 1,5-Pentandiol, 3-Methyl-1,5-pentandiol oder Diethylenglykol.

Als Diol-Kettenverlängerer am meisten bevorzugt ist 1,4-Butandiol.

Der Diol-Kettenverlängerer liegt in der Zusammensetzung bevorzugt in einer solchen Menge vor, dass 20% bis 80%, bevorzugt 30% bis 70%, der vorhandenen Isocyanatgruppen über den Diol-Kettenverlängerer vernetzen können.

Die erste Komponente der Zusammensetzung enthält gegebenenfalls weitere Polyole.

Als weitere Polyole geeignet sind insbesondere die Folgenden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen. Speziell geeignet sind Ethylenoxid-terminierte Polyoxypropylenpolyole.
- Polyesterpolyole, insbesondere aus der Polykondensation von Hydroxycarbonsäuren oder insbesondere solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie insbesondere Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure oder Trimellithsäureanhydrid, oder Mischungen der vorgenannten Säuren, sowie Polyesterpolyole aus Lactonen wie insbesondere ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Rizinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht im Bereich von 400 bis 8'000 g/mol, insbesondere 1'000 bis 6'000 g/mol, und eine mittlere OH-Funktionalität im Bereich von 1.6 bis 4 auf.

Bevorzugt enthält die Zusammensetzung mindestens ein weiteres Polyol, welches ein Polyetherpolyol oder ein Poly(meth)acrylatpolyol oder ein polyhydroxyfunktionelles Fett oder Öl ist.

Besonders bevorzugt enthält die Zusammensetzung als weiteres Polyol ein Ethylenoxid-terminiertes Polyoxypropylendi- oder -triol und/oder Rizinusöl.

Der Anteil an festem Polymer aus dem Polymer-Polyol bezogen auf die Summe aus Polymer-Polyol und den gegebenenfalls vorhandenen weiteren Polyolen liegt bevorzugt im Bereich von 5 bis 30 Gewichts-%, insbesondere 8 bis 25 Gewichts-%. Eine solche Zusammensetzung weist eine gute Verarbeitbarkeit und eine hohe Festigkeit auf.

Die zweite Komponente der Zusammensetzung enthält Diphenylmethandiisocyanat (MDI). Als MDI bevorzugt sind Diphenylmethan-4,4'-diisocyanat (4,4'-MDI), Diphenylmethan-2,4'-diisocyanat (2,4'-MDI) und/oder Diphenylmethan-2,2'-diisocyanat (2,2'-MDI). Besonders bevozugt ist 4,4'-MDI. Damit werden besonders hohe Festigkeiten erreicht.

Bevorzugt weist die zweite Komponente einen Gehalt an monomerem Diphenylmethandiisocyanat im Bereich von 20 bis 100 Gewichts-%, besonders bevorzugt 40 bis 100 Gewichts-%, insbesondere 60 bis 100 Gewichts-%, auf.

Das MDI liegt bevorzugt in bei Raumtemperatur flüssiger Form mit hohem Gehalt an 4,4'-MDI vor. Das sogenannte "flüssige MDI" stellt entweder durch partielle chemische Modifizierung - insbesondere Carbodiimidisierung bzw. Uretoniminbildung oder Adduktbildung mit Polyolen - verflüssigtes 4,4'-MDI dar, oder es ist ein durch Abmischen gezielt herbeigeführtes oder durch den Herstellungsprozess bedingtes Gemisch von 4,4'-MDI mit anderen MDI-Isomeren (2,4'-MDI und/oder 2,2'-MDI), MDI-Oligomeren oder MDI-Homologen. Bevorzugt sind monomere MDI-Typen mit erhöhtem Anteil an 2,4'-MDI, beispielsweise die kommerziell erhältlichen Produkte Desmodur® 2424 (von Bayer MaterialScience) oder Lupranat® MI (von BASF), weiterhin Gemische von monomerem MDI und MDI-Homologen mit einem niedrigen Anteil an Homologen, beispielsweise die kommerziell erhältlichen Produkte Desmodur® VL50 (von Bayer MaterialScience) oder Voranate® M 2940 (von Dow), weiterhin partiell carbodiimidisiertes 4,4'-MDI, beispielsweise die kommerziell erhältlichen Produkte Desmodur® CD (von Bayer MaterialScience), Lupranat® MM 103 (von BASF), Isonate® M 143 oder Isonate® M 309 (beide von Dow), Suprasec® 2020 oder Suprasec® 2388 (beide von Huntsman), sowie weiterhin anteilig mit Polyolen bzw. mehrfunktionellen Alkoholen wie zum Beispiel Trimethylolpropan adduktierte MDI-Typen, sogenannte Quasi-Prepolymere, beispielsweise die kommerziell erhältlichen Produkte Desmodur® VH20 N, Desmodur® E21, Desmodur® E210 (alle von Bayer MaterialScience), Lupranat® MP 102 (von BASF), Echelon™ MP 107, Echelon™ MP 106 oder Echelon™ MP 102 (alle von Dow). Der Isocyanatgehalt dieser Quasi-Prepolymere liegt bevorzugt im Bereich von 10 bis 30 Gewichts-%, insbesondere 15 bis 28 Gewichts-%.

Besonders bevorzugt liegt das MDI in Form von partiell carbodiimidisiertem 4,4'-MDI und/oder in Form von anteilig mit Polyolen bzw. polyfunktionellen Alkoholen adduktiertem 4,4'-MDI vor.

Bevorzugt weist die zweite Komponente der Zusammensetzung einen Isocyanat-Gehalt im Bereich von 10 bis 33.6 Gewichts-%, besonders bevorzugt 15 bis 33.6 Gewichts-%, insbesondere 20 bis 33.6 Gewichts-%, auf. Eine solche zweite Komponente weist typischerweise eine sehr niedrige Viskosität auf und kann die erste Komponente gut verdünnen, wodurch die Zusammensetzung sehr gut verarbeitbar ist.

Die Zusammensetzung enthält weiterhin mindestens ein Aldimin der Formel (I).

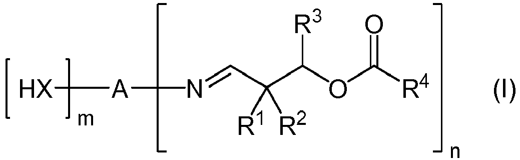

Bevorzugt steht A für einen Rest ausgewählt aus der Gruppe bestehend aus 2-Methyl-1,5-pentylen; 1,6-Hexylen; 2,2(4),4-Trimethyl-1,6-hexamethylen; 1,8-Octylen; 1,10-Decylen; 1,12-Dodecylen; (1,5,5-Trimethylcyclohexan-1-yl)methan-1,3; 1,3-Cyclohexylen-bis(methylen); 1,4-Cyclohexylen-bis(methylen); 1,3-Phenylen-bis(methylen); 2- und/oder 4-Methyl-1,3-cyclohexylen; 3-Oxa-1,5-pentylen; 3,6-Dioxa-1,8-octylen; 4,7-Dioxa-1,10-decylen; α,ω-Polyoxypropylen mit einem Molekulargewicht im Bereich von 170 bis 450 g/mol; und Trimethylolpropan-gestartetes Tris(ω-Polyoxypropylen) mit einem mittleren Molekulargewicht im Bereich von 330 bis 450 g/mol.

Besonders bevorzugt steht A für 1,6-Hexylen; (1,5,5-Trimethylcyclohexan-1-yl)methan-1,3; 3-Oxa-1,5-pentylen; α,ω-Polyoxypropylen mit einem mittleren Molekulargewicht von ca. 200 g/mol oder Trimethylolpropan gestartetes Tris(ω-Polyoxypropylen) mit einem mittleren Molekulargewicht von ca. 390 g/mol. Am meisten bevorzugt steht A für 1,6-Hexylen oder für (1,5,5-Trimethylcyclohexan-1-yl)methan-1,3. Mit 1,6-Hexylen werden besonders hohe Festigkeiten und mit (1,5,5-Trimethylcyclohexan-1-yl)methan-1,3 werden besonders lange Offenzeiten erreicht.

Bevorzugt stehen R¹ und R² jeweils für Methyl.

Bevorzugt steht R³ für Wasserstoff.

Bevorzugt steht R⁴ für einen linearen Alkylrest mit 11 bis 20 C-Atomen, insbesondere für einen linearen Alkylrest mit 11 C-Atomen.

Diese Aldimine sind vor, während und nach der hydrolytischen Aktivierung und Vernetzung mit Isocyanaten praktisch geruchlos.

Bevorzugt steht m für 0 und n für 2 oder 3, insbesondere für 2.

Für den Fall, dass m für 1 steht, steht n bevorzugt für 1.

Für den Fall, dass m für 1 steht, steht X bevorzugt für O.

Ein Aldimin der Formel (I) ist insbesondere erhältlich aus der Kondensationsreaktion von mindestens einem primären Amin der Formel (II) mit mindestens einem Aldehyd der Formel (III).

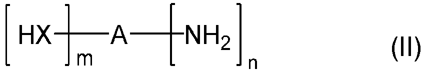

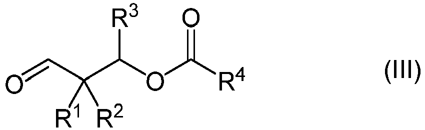

In den Formeln (II) und (III) weisen m, n, A, X, R¹, R², R³ und R⁴ die bereits genannten Bedeutungen auf.

Für diese Kondensationsreaktion wird der Aldehyd der Formel (III) bevorzugt stöchiometrisch oder überstöchiometrisch bezogen auf die primären Aminogruppen des Amins der Formel (II) eingesetzt. Die Umsetzung wird vorteilhaft bei einer Temperatur im Bereich von 15 bis 120 °C durchgeführt, gegebenenfalls in Anwesenheit eines Lösemittels oder auch lösemittelfrei. Das freigesetzte Wasser wird bevorzugt entfernt, zum Beispiel azeotropisch mittels einem geeigneten Lösemittel, oder direkt aus der Reaktionsmischung durch Anlegen von Vakuum.

Geeignete Amine der Formel (II) sind aliphatische, cycloaliphatische und aromatische Amine, insbesondere die Folgenden:
- Aminoalkohole wie insbesondere 2-Aminoethanol, 2-Amino-1-propanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol, eine primäre Aminogruppe tragende Derivate von Glykolen wie Diethylenglykol, Dipropylenglykol, Dibutylenglykol und höheren Oligomeren dieser Glykole, insbesondere 2-(2-Aminoethoxy)ethanol, 2-(2-(2-Aminoethoxy)ethoxy)ethanol oder Produkte aus der einfachen Cyanoethylierung und anschliessender Hydrierung von Glykolen, insbesondere 3-(2-Hydroxyethoxy)propylamin, 3-(2-(2-Hydroxyethoxy)ethoxy)propylamin oder 3-(6-Hydroxyhexyloxy)propylamin;
- primär-sekundäre Amine wie insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Methyl-1,3-propandiamin, N-Ethyl-1,3-propandiamin, N-Butyl-1,3-propandiamin, N-Hexyl-1,3-propandi-amin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohe-xylamino-1-pentylamin, Diethylentriamin (DETA), Dipropylentriamin (DPTA), N-(2-Aminoethyl)-1,3-propandiamin (N3-Amin), Bis-hexamethylentriamin (BHMT), N3-(3-Aminopentyl)-1,3-pentandiamin, N5-(3-Aminopropyl)-2-methyl-1,5-pentandiamin oder N5-(3-Amino-1-ethylpropyl)-2-methyl-1,5-pentandiamin;
- primäre Di- und Triamine wie insbesondere Ethylendiamin, 1,2- und 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (= Isophorondiamin), 2- und 4-Methyl-1,3-diaminocyclohexan und Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo[5.2.1.02,6]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol, 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin, cycloaliphatische ethergruppenhaltige Diamine aus der Propoxylierung und nachfolgenden Aminierung von 1,4-Dimethylolcyclohexan, erhältlich insbesondere als Jeffamine® RFD-270 (von Huntsman), Polyoxyalkylenamine mit einem mittleren Molekulargewicht im Bereich von 200 bis 500 g/mol, wie sie im Handel beispielsweise unter den Handelsnamen Jeffamine® (von Huntsman), Polyetheramine (von BASF) und PC Amine® (von Nitroil) erhältlich sind, dadurch gekennzeichnet, dass sie 2-Aminopropyl- oder 2-Aminobutyl-Endgruppen tragen, insbesondere Jeffamine® D-230, Jeffamine® D-400, Jeffamine® XTJ-582, Jeffamine® HK-511, Jeffamine® T-403 oder Jeffamine® XTJ-566 (alle von Huntsman), oder dazu analoge Typen von BASF und Nitroil;
- aromatische Polyamine wie insbesondere 1,3-Phenylendiamin, 1,4-Phenylendiamin, 4,4'-, 2,4' und 2,2'-Diaminodiphenylmethan, 2,4- und 2,6-Toluylendiamin, Mischungen von 3,5-Diethyl-2,4- und -2,6-toluylendiamin (DETDA), 3,5-Dimethylthio-2,4- und -2,6-toluylendiamin, 3,3',5,5'-Tetraethyl-4,4'-diaminodiphenylmethan (M-DEA), 3,3'-Diisopropyl-5,5'-dimethyl-4,4'-diaminodiphenylmethan (M-MIPA) oder 3,3',5,5'-Tetraisopropyl-4,4'-diaminodiphenylmethan (M-DIPA).

Bevorzugte Amine der Formel (II) sind ausgewählt aus der Gruppe bestehend aus 1,5-Diamino-2-methylpentan, 1,6-Hexandiamin, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 1,3-Bis(aminomethyl)cyclohexan, 1,4-Bis(aminomethyl)cyclohexan, 1,3-Bis(aminomethyl)benzol, 2- und/oder 4-Methyl-1,3-diaminocyclohexan, 2-(2-Aminoethoxy)ethanol, 3,6-Dioxaoctan-1,8-diamin, 4,7-Dioxadecan-1,10-diamin und Polyoxypropylenamine mit einem mittleren Molekulargewicht im Bereich von 200 bis 500 g/mol, insbesondere Jeffamine® D-230, Jeffamine® D-400 und Jeffamine® T-403. Davon bevorzugt sind 1,6-Hexandiamin, 1-Amino-3-aminomethyl-3,5,5-trimethylcyclohexan, 2-(2-Aminoethoxy)ethanol, Polyoxypropylendiamin mit einem mittleren Molekulargewicht von ca. 230 g/mol und Polyoxypropylentriamin mit einem mittleren Molekulargewicht von ca. 440 g/mol.
Am meisten bevorzugt ist 1-Amino-3-aminomethyl-3,5,5-trimethylcyclohexan.

Ein besonders geeigneter Aldehyd der Formel (III) ist 2,2-Dimethyl-3-lauroyl-oxypropanal.

Geeignete Aldimine der Formel (I) sind insbesondere ausgewählt aus der Gruppe bestehend aus N,N'-Bis(2,2-dimethyl-3-lauroyloxypropyliden)-hexamethylen-1,6-diamin, N,N'-Bis(2,2-dimethyl-3-lauroyloxypropyliden)-3-aminomethyl-3,5,5-trimethylcyclohexylamin, N-2,2-Dimethyl-3-lauroyloxypropyliden-2-(2-aminoethoxy)ethanol, N,N'-Bis(2,2-dimethyl-3-lauroyloxypropylidene)polyoxypropylendiamin mit einem mittleren Molekulargewicht im Bereich von 710 bis 810 g/mol und N,N',N"-Tris(2,2-dimethyl-3-lauroyloxypropyliden)-polyoxy-propylenetriamin mit einem mittleren Molekulargewicht im Bereich von 1'190 bis 1'290 g/mol.

Besonders geeignete Aldimine der Formel (I) sind N,N'-Bis(2,2-dimethyl-3-laur-oyloxypropyliden)-hexamethylen-1,6-diamin und/oder N,N'-Bis(2,2-dimethyl-3-lauroyloxypropyliden)-3-aminomethyl-3,5,5-trimethylcyclohexylamin. Mit diesen Aldiminen werden Zusammensetzungen mit besonders hohen Festigkeiten erhalten.

Mit N,N'-Bis(2,2-dimethyl-3-lauroyloxypropyliden)-hexamethylen-1,6-diamin werden ganz besonders hohe Festigkeiten begünstigt, und mit N,N'-Bis(2,2-dimethyl-3-lauroyloxypropyliden)-3-aminomethyl-3,5,5-trimethylcyclohexylamin werden besonders lange Offenzeiten erreicht.

Das Aldimin der Formel (I) kann als Bestandteil der ersten Komponente oder als Bestandteil der zweiten Komponente oder in beiden Komponenten vorhanden sein. Bevorzugt ist es ein Bestandteil der ersten Komponente.

Für den Fall, dass m für 1 steht, ist das Aldimin der Formel (I) entweder ein Bestandteil der ersten Komponente, oder es liegt in der zweiten Komponente in mit MDI umgesetzter Form vor, insbesondere wie in der folgenden Formel dargestellt:

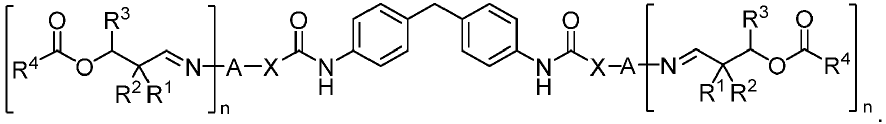

Das Aldimin der Formel (I) liegt in der Zusammensetzung bevorzugt in einer solchen Menge vor, dass 5% bis 50%, bevorzugt 10% bis 30%, der vorhandenen Isocyanatgruppen über das Aldimin der Formel (I) vernetzen können.

Die Zusammensetzung enthält bevorzugt zusätzlich mindestens einen Katalysator für die Reaktion von Hydroxylgruppen mit Isocyanatgruppen.

Dafür geeignet sind Organozinn(IV)-Verbindungen wie insbesondere Dibutylzinndiacetat, Dibutylzinndilaurat, Dimethylzinndilaurat, Dibutylzinndichlorid, Dibutylzinndiacetylacetonat oder Dioctylzinndilaurat.

Bevorzugt sind aber Verbindungen von Eisen(III), Bismut(III) und Zirkonium(IV), besonders bevorzugt Komplexverbindungen von Eisen(III), Bismut(III) und Zirkonium(IV). Solche Komplexverbindungen sind nach bekannten Verfahren ausgehend von beispielsweise Eisen(III)-oxid, Bismut(III)-oxid oder Zirkonium(IV)-oxid herstellbar. Mit solchen Komplexverbindungen härtet die Zusammensetzung rasch und weitgehend ohne Blasenbildung zu einem nicht-klebrigen Material von hoher Festigkeit aus.

Besonders bevorzugt enthält mindestens eine der beiden Komponenten der Zusammensetzung eine Zirkonium(IV)-Verbindung, insbesondere eine Zirkonium(IV)-Komplexverbindung. Mit Zirkonium(IV)-Verbindungen als Katalysator verfügt die Zusammensetzung über eine lange Topfzeit bei schneller Aushärtung.

Geeignete Liganden für Komplexverbindungen von Eisen(III), Bismut(III) oder Zirkonium(IV) sind insbesondere
- Alkoholate, insbesondere Methanolat, Ethanolat, Propanolat, Isopropanolat, Butanolat, tert.Butanolat, Isobutanolat, Pentanolat, Neopentanolat, Hexanolat oder Octanolat;
- Carboxylate, insbesondere Formiat, Acetat, Propionat, Butanoat, Isobutanoat, Pentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat oder Phenylacetat;
- 1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butanandionat oder 2-Acetylcyclohexanonat;
- Oxinat;
- 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, Ethyl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat oder 2-Oxo-cyclohexancarbonsäureethylesterat; und
- 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclo-pentancarboxamidat, N,N-Dibutyl-3-oxo-3-phenylpropanamidat, N,N-Bis(2-methoxyethyl)-3-oxo-3-phenylpropanamidat oder N-Polyoxyalkylen-1,3-ketoamidate wie insbesondere Acetoamidate von Polyoxyalkylenaminen mit ein, zwei oder drei Aminogruppen und einem Molekulargewicht bis 5000 g/mol, insbesondere den von Huntsman unter dem Handelsnamen Jeffamine® erhältlichen Typen SD-231, SD-401, SD-2001, ST-404, D-230, D-400, D-2000, T-403, M-600 und XTJ-581.

Besonders bevorzugte Zirkonium(IV)-Komplexverbindungen sind ausgewählt aus der Gruppe bestehend aus Zirkonium(IV)-tetrakis(acetat), Zirkonium(IV)-tetrakis(octanoat), Zirkonium(IV)-tetrakis(2-ethylhexanoat), Zirkonium(IV)-tetrakis(neodecanoat), Zirkonium(IV)-tetrakis(acetylacetonat), Zirkonium(IV)-tetrakis(1,3-diphenylpropan-1,3-dionat), Zirkonium(IV)-tetrakis(ethylacetoacetat), Zirkonium(IV)-tetrakis(N,N-diethyl-3-oxo-butanamidat) und Zirkonium(IV)-Komplexverbindungen mit verschiedenen dieser genannten Liganden.

Der Katalysator für die Reaktion von Hydroxylgruppen mit Isocyanatgruppen kann als Bestandteil der ersten und/oder als Bestandteil der zweiten Komponente vorhanden sein. Bevorzugt ist er ein Bestandteil der ersten Komponente.

Die Zusammensetzung enthält bevorzugt zusätzlich mindestens einen Katalysator für die Hydrolyse des Aldimins. Dafür geeignet sind insbesondere organische Säuren, insbesondere Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure und insbesondere Salicylsäure.

Der Katalysator für die Hydrolyse des Aldimins ist bevorzugt ein Bestandteil der ersten Komponente.

Die Zusammensetzung enthält bevorzugt zusätzlich weitere für Polyurethan-Flüssigfolien gebräuchliche Zusätze. Insbesondere können die folgenden Hilfs- und Zusatzstoffe vorhanden sein:
- anorganische und organische Füllstoffe, insbesondere gemahlene oder gefällte Calciumcarbonate, welche gegebenenfalls mit Fettsäuren, insbesondere Stearaten, beschichtet sind, Baryt (Schwerspat), Quarzmehle, Quarzsand, Dolomite, Wollastonite, Kaoline, calcinierte Kaoline, Schichtsilikate wie Glimmer oder Talk, Zeolithe, Aluminiumhydroxide, Magnesiumhydroxid, Kieselsäuren inklusiv hochdisperse Kieselsäuren aus Pyrolyseprozessen, Zemente, Gipse, Flugaschen, industriell hergestellte Russe, Graphit, MetallPulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern, Kunststofffasern wie Polyamidfasern oder Polyethylenfasern oder Naturfasern wie Wolle, Cellulose, Hanf oder Sisal;
- Farbstoffe;
- anorganische oder organische Pigmente, beispielsweise Titandioxid, Chromoxid oder Eisenoxide;
- weitere Katalysatoren, welche die Reaktion der Isocyanatgruppen beschleunigen, insbesondere Verbindungen von Zink, Mangan, Chrom, Kobalt, Kupfer, Nickel, Molybdän, Blei, Cadmium, Quecksilber, Antimon, Vanadium, Titan und Kalium, insbesondere Zink(II)-acetat, Zink(II)-2-ethylhexanoat, Zink(II)-laurat, Zink(II)-acetylacetonat, Kobalt(II)-2-ethylhexanoat, Kupfer(II)-2-ethylhexanoat, Nickel(II)-naphthenat, Aluminiumlactat, Aluminiumoleat, Di-isopropoxytitan-bis-(ethylacetoacetat) und Kaliumacetat, tertiäre Aminogruppen enthaltende Verbindungen, insbesondere 2,2'-Dimorpholinodiethylether, N-Ethyl-diisopropylamin, N,N,N',N'-Tetramethylalkylendiamine, Pentamethylalkylentriamine und höhere Homologe davon, Bis-(N,N-diethylaminoethyl)-adipat, Tris-(3-dimethylaminopropyl)amin, 1,4-Diazabicyclo[2.2.2]octan (DABCO), 1,8-Diazabicyclo[5.4.0]undec-7-en (DBU), 1,5-Diazabicyclo[4.3.0]-non-5-en (DBN), N-Alkylmorpholine, N,N'-Dimethylpiperazin; stickstoffaromatische Verbindungen wie 4-Dimethylamino-pyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen;
- Additive wie insbesondere Netzmittel, Verlaufmittel, Entschäumer, Entlüfter, Stabilisatoren gegen Oxidation, Wärme, Licht und UV-Strahlung, Biozide, Trocknungsmittel wie insbesondere Molekularsiebpulver, Haftvermittler wie insbesondere Organoalkoxysilane, Rheologie-Modifizierer wie insbesondere Schichtsilikate, Derivate von Rizinusöl, hydriertes Rizinusöl, Polyamide, Polyamidwachse, Polyurethane, Harnstoffverbindungen, pyrogene Kieselsäuren, oder hydrophob modifizierte Polyoxyethylene;
- Weichmacher, insbesondere Phthalate, Trimellitate, Adipate, Sebacate, Azelate, Citrate, Benzoate, Diester von ortho-Cyclohexandicarbonsäure, acetyliertes Glycerin oder Monoglyceride, oder Kohlenwasserstoffharze;
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate, Melamin und Melaminderivate wie Phosphate oder Isocyanurate, expandierende Graphite, Zinkborate oder Antimontrioxid.

Solche Zusätze können als Bestandteil der ersten oder der zweiten Komponente vorhanden sein. Mit Isocyanatgruppen reaktive Substanzen sind bevorzugt ein Bestandteil der ersten Komponente. Es kann sinnvoll sein, gewisse Bestandteile vor dem Einmischen in die jeweilige Komponente chemisch oder physikalisch zu trocknen.

Die Zusammensetzung ist bevorzugt im Wesentlichen frei von leichtflüchtigen Lösemitteln. Insbesondere enthält sie höchstens 1 Gewichts-%, bevorzugt höchstens 0.5 Gewichts-%, an leichtflüchtigen Lösemitteln, besonders bevorzugt ganz frei von leichtflüchtigen Lösemitteln. Als "leichtflüchtiges Lösemittel" wird dabei eine flüssige organische Verbindung mit einem Dampfdruck von mindestens 0.01 kPa bei einer Temperatur von 293.14 K bezeichnet, welche gegenüber Isocyanaten nicht reaktiv ist.

Bevorzugt enthält die Zusammensetzung mindestens einen anorganischen Füllstoff.

Das Verhältnis der gegenüber Isocyanatgruppen reaktiven Gruppen wie insbesondere Hydroxylgruppen, primären und sekundären Aminogruppen und Aldiminogruppen zu den Isocyanatgruppen liegt in der Zusammensetzung geeigneterweise im Bereich von 0.5 bis 1.1, bevorzugt im Bereich von 0.7 bis 1.05, besonders bevorzugt im Bereich von 0.8 bis 1.0, insbesondere bei etwa 0.95.
- Eine bevorzugte erste Komponente enthält
- mindestens ein Polymer-Polyol,
- mindestens einen Diol-Kettenverlängerer,
- mindestens ein Aldimin der Formel (I) und
- gegebenenfalls weitere Polyole,
wobei der Anteil an festem Polymer aus dem Polymer-Polyol bezogen auf die Summe aus Polymer-Polyol und weiteren Polyolen im Bereich von 5 bis 30 Gewichts-%, insbesondere 8 bis 25 Gewichts-%, liegt.

Dabei liegen das Polymer-Polyol, der Diol-Kettenverlängerer, das Aldimin der Formel (I) und weitere Polyole in einer solchen Menge vor, dass von der Gesamtzahl ihrer gegenüber Isocyanaten reaktiven Gruppen
- 10% bis 50%, insbesondere 20% bis 40%, aus dem Polymer-Polyol und gegebenenfalls vorhandenen weiteren Polyolen,
- 20% bis 80%, insbesondere 40% bis 70%, aus dem Diol-Kettenverlängerer, und
- 5% bis 50%, insbesondere 10% bis 30%, aus dem Aldimin der Formel (I) stammen.

Die erste Komponente der Zusammensetzung weist bevorzugt eine Viskosität bei 25 °C im Bereich von 1 bis 6 Pa·s, bevorzugt 1 bis 4 Pa·s, auf.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt, so dass eine makroskopisch homogene Flüssigkeit entsteht. Jede Komponente wird in einem separaten feuchtigkeitsdichten Gebinde gelagert. Ein geeignetes Gebinde ist insbesondere ein Fass, ein Container, ein Hobbock, ein Eimer, eine Büchse, ein Beutel, ein Kanister oder eine Flasche. Die Komponenten sind lagerstabil, das heisst, dass sie vor ihrer Anwendung während mehreren Monaten bis zu einem Jahr und länger im jeweiligen Gebinde aufbewahrt werden können, ohne dass sich ihre Eigenschaften in einem für ihren Gebrauch relevanten Ausmass verändern.

Zur Anwendung der Zusammensetzung werden die beiden Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. In Gewichtsteilen liegt das Mischungsverhältnis zwischen der ersten und der zweiten Komponente typischerweise im Bereich von etwa 1:1 bis 20:1, insbesondere 2:1 bis 10:1.

Das Vermischen der beiden Komponenten erfolgt mittels eines geeigneten Rührwerkes, beispielsweise eines Doppelwellenmischers, wobei die einzelnen Komponenten geeigneterweise im richtigen Mischungsverhältnis vorkonfektioniert sind. Ebenfalls möglich ist eine koninuierliche maschinelle Verarbeitung mittels einer Zweikomponenten-Dosieranlage mit statischer oder dynamischer Vermischung der Komponenten. Beim Mischen ist darauf zu achten, dass die zwei Komponenten möglichst homogen vermischt werden. Bei einer unzureichenden Vermischung treten lokale Abweichungen vom vorteilhaften Mischungsverhältnis auf, was sich in einer Verschlechterung der mechanischen Eigenschaften und/oder Blasenbildung auswirken kann. Wird vor der Applikation vermischt, so muss darauf geachtet werden, dass zwischen dem Vermischen der Komponenten und der Applikation nicht zu viel Zeit vergeht, da es dadurch zu Störungen, wie beispielsweise einem schlechten Verlauf oder einem verlangsamten oder unvollständigen Aufbau der Haftung zum Substrat, kommen kann. Das Vermischen erfolgt insbesondere bei Umgebungstemperatur, welche typischerweise im Bereich von etwa 5 bis 50 °C, bevorzugt bei etwa 10 bis 35 °C, liegt.

Mit dem Vermischen der beiden Komponenten beginnt die Aushärtung durch chemische Reaktion. Dabei reagieren vorhandene Hydroxylgruppen und primäre und sekundäre Aminogruppen mit vorhandenen Isocyanatgruppen. Aldiminogruppen reagieren mit vorhandenen Isocyanatgruppen, sobald sie mit Feuchtigkeit in Kontakt kommen. Das zur Hydrolyse der Aldiminogruppen benötigte Wasser kann dabei, zumindest teilweise, in der Zusammensetzung vorhanden sein, oder es diffundiert von aussen in Form von Feuchtigkeit aus der Umgebung, insbesondere in Form von Luftfeuchtigkeit oder Substratfeuchte, in die vermischte Zusammensetzung. Überschüssige Isocyanatgruppen reagieren mit vorhandener Feuchtigkeit. Als Resultat dieser Reaktionen härtet die Zusammensetzung zu einem festen Material aus. Dieser Vorgang wird auch als Vernetzung bezeichnet. Aus den Aldiminogruppen freigesetzter Aldehyd verbleibt während und nach der Aushärtung in der Zusammensetzung, wo er als geruchlose Substanz eine gewisse weichmachende Wirkung ausübt. Aufgrund seiner hervorragenden Verträglichkeit in der Zusammensetzung zeigt er keinerlei Tendenz zu Separation oder Migration.

Weiterhin betrifft die Erfindung eine ausgehärtete Zusammensetzung, erhalten aus einer Zusammensetzung, wie sie vorhergehend beschrieben worden ist, nach dem Vermischen der beiden Komponenten und deren Aushärtung.

Bei der Applikation wird die frisch vermischte, noch flüssige Zusammensetzung innerhalb ihrer Offenzeit als Beschichtung auf eine ebene oder leicht geneigte Fläche appliziert, typischerweise indem sie auf ein Substrat gegossen und anschliessend flächig bis zur erwünschten Schichtdicke verteilt wird, beispielsweise mittels einer Rolle, einem Schieber, einer Zahntraufel oder einer Spachtel.

Als "Offenzeit" oder auch "Topfzeit" wird dabei die Zeitspanne zwischen dem Vermischen der Komponenten und dem Ende eines für die Verarbeitung geeigneten Zustands der Zusammensetzung bezeichnet. Ein typisches Mass für das Ende der Topfzeit kann eine Verdoppelung der Viskosität sein.

Bevorzugt weist die Zusammensetzung eine Minute nach dem Vermischen eine Viskosität bei 25 °C im Bereich von 0.5 bis 2 Pa·s, bevorzugt 0.5 bis 1.5 Pa·s, auf. So kann sie als Flüssigfolie sehr gut verarbeitet werden. Sie ist bevorzugt selbstnivellierend, d.h. sie verläuft selbständig zu einer ebenen Oberfläche, nachdem sie mittels Rolle, Zahntraufel, Stachelwalze oder dergleichen bearbeitet wurde.

In einem Arbeitsgang wird typischerweise eine Schichtdicke im Bereich von 0.5 bis 3 mm, insbesondere 1.0 bis 2.5 mm, aufgetragen.

Die Zusammensetzung kann auf unterschiedliche Substrate appliziert werden, wobei sie bei der Aushärtung eine elastische Schicht mit statischer und dynamischer Rissüberbrückung ausbildet. Sie schützt den Untergrund vor dem Eindringen von Wasser, Tausalzen, Säuren, Laugen, Öl, Benzin etc., sowie vor Abrasion und Verschleiss und kann zusätzlich der ästhetischen Aufwertung dienen.

Die beschriebene Zusammensetzung kann in einer oder mehreren Schichten aufgetragen werden. Typischerweise wird sie einschichtig appliziert. Auf die beschriebene Zusammensetzung können eine oder mehrere Deckbeschichtungen aufgetragen werden. Als oberste bzw. letzte Schicht wird vorzugsweise eine Versiegelung appliziert.

Als "Versiegelung" wird dabei eine transparente oder pigmentierte, hochwertige Beschichtung bezeichnet, welche als oberste dünne Schicht auf eine Beschichtung appliziert wird. Sie schützt und veredelt deren Oberfläche und versiegelt deren Poren. Eine typische Schichtdicke dabei ist im trockenen Zustand im Bereich von 0.03 bis 0.3 mm.

Die Versiegelung bietet einen zusätzlichen Schutz vor UV-Licht, Oxidation oder mikrobiellem Bewuchs, bietet ästhetische Gestaltungsmöglichkeiten, schützt die Beschichtung vor mechanischen Verletzungen und/oder verhindert das Anschmutzen und/oder dient zur Fixierung von eingestreuten Aggregaten.

Die Zusammensetzung kann kurz nach der Applikation mit Aggregaten wie insbesondere Quarzsand eingestreut werden. Dazu wird Quarzsand in die flächig applizierte, aber noch flüssige Zusammensetzung gestreut, so dass dieser nach der Aushärtung zumindest teilweise an der ausgehärteten Zusammensetzung anhaftet oder darin eingebunden ist. Das Einstreuen kann im Überschuss oder mit einer definierten Menge Quarzsand erfolgen. Wird im Überschuss abgesandet, so wird nicht an der Zusammensetzung anhaftender Sand nach der Aushärtung entfernt.

Die Zusammensetzung kann verwendet werden zum Schutz von Böden, insbesondere als Beschichtung von Balkonen, Terrassen, Plätzen, Brücken, Parkdecks, oder zur Abdichtung von Dächern, insbesondere Flachdächern oder schwach geneigten Dachflächen oder Dachgärten, oder im Innern von Gebäuden zur Wasserabdichtung, beispielsweise unter Fliesen oder Keramikplatten in Nasszellen oder Küchen, oder als Bodenbelag in Küchen, Industriehallen oder Fabrikationsräumen, als Abdichtung in Auffangwannen aller Art, Kanälen, Schächten, Abwasserbehandlungsanlagen, aber auch als Vergussmasse zur Hohlraumversiegelung, als Nahtabdichtung oder als Schutzbeschichtung für beispielsweise Rohre. Sie kann auch zu Reparaturzwecken als Abdichtung oder Beschichtung verwendet werden, beispielsweise von undichten Dachmembranen oder nicht mehr tauglichen Bodenbelägen oder insbesondere als Reparaturmasse für hochreaktive Spritzabdichtungen.

Eine bevorzugte Verwendung ist die Verwendung in einem Bodenbeschichtungssystem, umfassend
- gegebenenfalls einen Primer und/oder eine Grundierung und/oder eine Reparatur- oder Nivelliermasse,
- mindestens eine Schicht der beschriebenen Zusammensetzung, wobei diese definiert oder überschüssig mit Quarzsand oder anderen Aggregaten abgestreut sein kann,
- gegebenenfalls eine Deckbeschichtung, welche definiert oder überschüssig mit Quarzsand oder anderen Aggregaten abgestreut sein kann, und
- eine Versiegelung.

Bevorzugt ist eine der erwähnten Schichten mit Quarzsand abgestreut.

Ein solches Bodenbeschichtungssystem ist besonders geeignet für begehbare Böden wie Parkdecks, Balkone, Terrassen oder Brücken.

Eine weitere bevorzugte Verwendung ist die Verwendung in einem Dachabdichtungssystem, umfassend
- gegebenenfalls einen Primer und/oder eine Grundierung und/oder eine Reparatur- oder Nivelliermasse,
- mindestens eine Schicht der beschriebenen Zusammensetzung in einer

Schichtdicke von 0.5 bis 5 mm,
- gegebenenfalls eine Deckbeschichtung, und
- gegebenenfalls eine Versiegelung.

Ein solches Dachabdichtungssystem ist besonders geeignet zur Abdichtung von flachen oder schwach geneigten Dächern und zur Reparatur von bestehenden, aber schadhaften Dachabdichtungen aller Art.

Geeignete Substrate, auf welche die Zusammensetzung appliziert werden kann, sind insbesondere
- Beton, Leichtbeton, Mörtel, Backstein, Ziegel, Dachziegel, Schiefer, Gips, Anhydrid oder Naturstein wie Granit oder Marmor;
- Reparatur- oder Nivelliermasse auf Basis PCC (Polymer-modifizierter Zementmörtel) oder ECC (Epoxidharz-modifizierter Zementmörtel);
- Metalle und Legierungen wie Aluminium, Kupfer, Eisen, Stahl, Buntmetalle, inklusive oberflächenveredelte Metalle und Legierungen wie verzinkte oder verchromte Metalle;
- Asphalt oder Bitumen;
- Kunststoffe wie PVC, ABS, PC, PA, Polyester, PMMA, SAN, Epoxidharze, Phenolharze, PUR, POM, PO, PE, PP, EPM oder EPDM, jeweils unbehandelt oder oberflächenbehandelt mittels Plasma, Corona oder Flammen; insbesondere PVC-, PO- (FPO, TPO) oder EPDM-Folien;
- Isolierschäume, insbesondere aus EPS, XPS, PUR, PIR, Steinwolle, Glaswolle oder geschäumtem Glas (Foamglas);
- beschichtete Substrate wie lackierte Fliesen, gestrichener Beton oder pulverbeschichtete Metalle.

Die Substrate können bei Bedarf vor dem Applizieren der Zusammensetzung vorbehandelt werden, beispielsweise durch physikalische und/oder chemische Reinigungsverfahren, beispielsweise Schleifen, Sandstrahlen, Kugelstrahlen, Bürsten, Absaugen oder Abblasen, Hoch- oder Höchstdruckwasserstrahlen und/oder durch Behandeln mit Reinigern oder Lösemitteln und/oder das Aufbringen eines Haftvermittlers, einer Haftvermittlerlösung oder eines Primers.

Bei der Applikation und Aushärtung entsteht ein Artikel, welcher mit einer erfindungsgemässen Zusammensetzung abgedichtet oder beschichtet wurde. Beim Artikel handelt es sich insbesondere um ein Bauwerk, insbesondere ein Bauwerk des Hoch- oder Tiefbaus oder um ein industriell gefertigtes Gut wie beispielsweise ein Rohr.

Die beschriebene Zusammensetzung zeichnet sich durch vorteilhafte Eigenschaften aus. Sie ist lösemittelfrei und geruchsarm und frei von flüchtigen monomeren Isocyanaten. Durch ihre niedrige Viskosität und lange Offenzeit ist sie ausgezeichnet von Hand verarbeitbar und nivelliert als flächige Beschichtung vollständig aus. Sie härtet in einem breiten Temperatur- und Feuchtigkeitsbereich rasch und störungsfrei aus, wobei ein elastisches Material mit hoher Festigkeit, Dehnbarkeit und Weiterreissfestigkeit bei moderatem E-Modul entsteht, und sie verfügt über eine ausgezeichnete Witterungsbeständigkeit. Dadurch ist die Zusammensetzung besonders geeignet als Flüssigfolie zur Abdichtung von Böden und Dächern von Bauwerken oder zur Reparatur von Abdichtungsmembranen und Spritzbeschichtungen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Verwendete kommerzielle Substanzen:

| | |
|---|---|
| Lupranol® 4003/1 | EO-endcapped Polyoxypropylentriol mit 45 Gew.-% gepfropftem SAN-Polymer, OH-Zahl 20.0 mg KOH/g (von BASF) |
| Desmophen® 5028 GT | EO-endcapped Polyoxypropylentriol mit 20 Gew.-% PHD-Polymer, OH-Zahl 28.5 mg KOH/g (von Bayer MaterialScience) |
| Voranol® CP 4755 | EO-endcapped Polyoxypropylentriol, OH-Zahl 34.7 mg KOH/g (von Dow) |
| Rizinusöl | OH-Zahl 165 mg KOH/g (von Alberdingk Boley) |
| Isonate® M 143 | modifiziertes Diphenylmethan-4,4'-diisocyanat enthaltend MDI-Carbodiimid-Addukte, bei Raumtemperatur flüssig, NCO-Gehalt 29.4 Gewichts-% (von Dow) |
| Desmodur® VH 20 N | modifiziertes Diphenylmethan-4,4'-diisocyanat enthaltend MDI-Carbodiimid-Addukt, umgesetzt mit wenig Polyol, bei Raumtemperatur flüssig; NCO-Gehalt 24.5 Gewichts-% (von Bayer MaterialScience) |
| Quarzmehl | Sikron® SF 600 (von Quarzwerke GmbH) |
| Zeolith-Paste | Molekularsiebpulver 3Å (von Zeochem), 50 Gewichts-% in Rizinusöl |
| K-Kat® A-209 | Zirkonium-Chelat-Komplex in Reaktivverdünner und tert.Butylacetat, Zirkonium-Gehalt 3.5 Gewichts-% (von King Industries) |
| DBTDL | Dibutylzinndilaurat (von Sigma Aldrich) |

### 2. Verwendete Aldimine:

Der **Amingehalt** (totaler Gehalt von freien und blockierten Aminogruppen inklusive Aldiminogruppen) wurde bestimmt mittels Titration (mit 0.1N HClO₄ in Essigsäure gegen Kristallviolett) und ist angegeben in mmol N/g.

### Aldimin-1: N,N'-Bis(2,2-dimethyl-3-lauroyloxypropyliden)-3-aminomethyl-3,5,5-trimethylcyclohexylamin

598 g (2.1 mol) 2,2-Dimethyl-3-lauroyloxypropanal wurden in einem Rundkolben unter Stickstoffatmosphäre vorgelegt. Unter Rühren wurden 170.3 g (1 mol) 3-Aminomethyl-3,5,5-trimethylcyclohexylamin (Vestamin® IPD von Evonik) zugegeben und anschliessend die flüchtigen Bestandteile bei 80 °C und 10 mbar Vakuum entfernt. Es wurden 732 g einer fast farblosen Flüssigkeit mit einem Amingehalt von 2.73 mmol N/g, was einem berechneten Equivalentgewicht von ca. 367 g/Eq entspricht, erhalten.

### Aldimin-2: N,N'-Bis(2,2-dimethyl-3-lauroyloxypropyliden)-hexamethylen-1,6-diamin

Wie für Aldimin-1 beschrieben wurden 622 g (2.2 mol) 2,2-Dimethyl-3-lauroyl-oxy-propanal und 166.0 g (1 mol) Hexamethylen-1,6-diamin-Lösung (70 Gew.-% in Wasser) umgesetzt. Es wurden 702 g einer fast farblosen Flüssigkeit mit einem Amingehalt von 2.98 mmol N/g, was einem berechneten Equivalentgewicht von ca. 336 g/Eq entspricht, erhalten.

### 3. Herstellung von Polyurethan-Flüssigfolien

Für jede Flüssigfolie wurden die in den Tabellen 1 bis 6 angegebenen Inhaltsstoffe in den angegebenen Mengen (in Gewichtsteilen) der ersten Komponente ("Komponente-1") mittels eines Zentrifugalmischers (SpeedMixer™ DAC 150, FlackTek Inc.) unter Feuchtigkeitsausschluss zu einer homogenen Flüssigkeit verarbeitet und aufbewahrt. Anschliessend wurde die in den Tabellen 1 bis 6 angegebenen Menge der zweiten Komponente zur ersten Komponente gegeben und die beiden Komponenten mittels des Zentrifugalmischers unter Feuchtigkeitsausschluss während 3 Minuten zu einer homogenen Flüssigkeit verarbeitet und diese unverzüglich folgendermassen geprüft:

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

Die **Topfzeit** wurde bestimmt, indem 20 Gramm der vermischten Flüssigfolie mittels eines Spatels in regelmässigen Zeitabständen bewegt wurden. War die Flüssigfolie für eine sinnvolle Verarbeitung gefühlsmässig erstmals zu stark angedickt, wurde die Topfzeit abgelesen.

Das **Ausbreitmass** wurde bestimmt, indem unmittelbar nach dem Vermischen der beiden Komponenten 80 g der vermischten Flüssigfolie auf eine PTFE-beschichteten Folie ausgegossen wurde und nach 24 h der mittlere Durchmesser der Zusammensetzung gemessen wurde.

Zur Bestimmung der mechanischen Eigenschaften wurde die Flüssigfolie auf eine PTFE-beschichteten Folie zu einem Film von 2 mm Dicke ausgegossen, dieser während 14 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (bei 0.5-5% Dehnung) geprüft. Weiter wurden einige Prüfkörper zur Bestimmung des **Weiterreisswiderstandes** (abgekürzt "Weiterreiss.") ausgestanzt und gemäss DIN ISO 34 bei einer Zuggeschwindigkeit von 500 mm/min geprüft.

Der **Aspekt** und **Blasenbildung** wurden visuell an den hergestellten Filmen beurteilt.

Die Resultate sind in den Tabellen 1 bis 6 angegeben.

Bei den Flüssigfolien ***F-1*** bis ***F-26*** handelt es sich um erfindungsgemässe Beispiele. Bei den Flüssigfolien ***Ref-1*** bis ***Ref-12*** handelt es sich um Vergleichsbeispiele.

**Tabelle 1: Zusammensetzung (in Gewichtsteilen) und Eigenschaften von F-1 bis F-5 und Ref-1 und Ref-2. "s.wenig" steht für "sehr wenig"**

| **Flüssigfolie** | | ***Ref-1*** | ***F-1*** | ***F-2*** | ***F-3*** | ***Ref-2*** | ***F-4*** | ***F-5*** |
|---|---|---|---|---|---|---|---|---|
| **Komponente-1:** | | | | | | | | |
| | Lupranol® 4003/1 | - | 10.00 | 20.00 | 30.00 | - | 10.00 | 20.00 |
| | Voranol® CP 4755 | 46.79 | 41.29 | 35.79 | 30.29 | 44.54 | 39.04 | 33.54 |
| | 1,4-Butandiol | 2.75 | 2.75 | 2.75 | 2.75 | 2.50 | 2.50 | 2.50 |
| | Aldimin-1 | 6.00 | 6.00 | 6.00 | 6.00 | 8.50 | 8.50 | 8.50 |
| | Quarzmehl | 44.00 | 39.50 | 35.00 | 30.50 | 44.00 | 39.50 | 35.00 |
| | K-Kat® A-209¹ | 0.13 | 0.13 | 0.13 | 0.13 | 0.13 | 0.13 | 0.13 |
| | Salicylsäure¹ | 0.33 | 0.33 | 0.33 | 0.33 | 0.33 | 0.33 | 0.33 |

| **Komponente**-**2:** | | | | | | | | |
|---|---|---|---|---|---|---|---|---|
| Isonate® M 143 | | 16.00 | 16.00 | 16.00 | 16.00 | 16.00 | 16.00 | 16.00 |
| Polymer-Gehalt² | | 0 | 8.8 | 16.1 | 22.4 | 0 | 9.2 | 16.8 |
| Viskosität (25 °C)³ | | 2.26 | 2.28 | 2.48 | 2.75 | 2.48 | 2.40 | 2.65 |
| Topfzeit [min] | | 75 | 75 | 75 | 70 | 70 | 80 | 75 |
| Ausbreitmass [cm] | | 20.4 | 20.1 | 20.7 | 21.0 | 20.0 | 20.0 | 21.1 |
| Zugfestigkeit [MPa] | | 3.9 | 4.6 | 4.8 | 5.0 | 3.8 | 4.7 | 5.2 |
| Bruchdehnung [%] | | 250 | 250 | 230 | 210 | 230 | 275 | 220 |
| E-Modul [MPa] | | 8.6 | 9.3 | 8.0 | 7.2 | 8.5 | 9.7 | 9.1 |
| Weiterreiss. [N/mm] | | 14.1 | 13.9 | 13.7 | 13.3 | 14.5 | 14.6 | 14.5 |
| Aspekt, Blasenbildung | | klebfrei, s.wenig | klebfrei, s.wenig | klebfrei, keine | klebfrei, keine | klebfrei, s.wenig | klebfrei, s.wenig | klebfrei, s.wenig |

| | | | | | | | | |
|---|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ der Komponente-1 [Pa·s] | | | | | | | | |

**Tabelle 2: Zusammensetzung (in Gewichtsteilen) und Eigenschaften von F-6 und F-7 und Ref-3 bis Ref-7. "s.wenig" steht für "sehr wenig"**

| **Flüssigfolie** | | ***Ref-3*** | ***F-6*** | ***F-7*** | ***Ref-4*** | ***Ref-5*** | ***Ref-6*** | ***Ref-7*** |
|---|---|---|---|---|---|---|---|---|
| **Komponente-1:** | | | | | | | | |
| | Lupranol® 4003/1 | - | 10.00 | 20.00 | - | 10.00 | 20.00 | 30.00 |
| | Voranol® CP 4755 | 42.29 | 36.79 | 31.29 | 52.52 | 47.02 | 41.52 | 36.02 |
| | 1,4-Butandiol | 2.25 | 2.25 | 2.25 | 3.35 | 3.35 | 3.35 | 3.35 |
| | Aldimin-1 | 11.00 | 11.00 | 11.00 | - | - | - | - |
| | Quarzmehl | 44.00 | 39.50 | 35.00 | 44.00 | 39.50 | 35.00 | 30.50 |
| | K-Kat® A-209¹ | 0.13 | 0.13 | 0.13 | 0.13 | 0.13 | 0.13 | 0.13 |
| | Salicylsäure ¹ | 0.33 | 0.33 | 0.33 | - | - | - | - |

| **Komponente-2:** | | | | | | | | |
|---|---|---|---|---|---|---|---|---|
| Isonate® M 143 | | 16.00 | 16.00 | 16.00 | 16.00 | 16.00 | 16.00 | 16.00 |
| Polymer-Gehalt² | | 0 | 9.6 | 17.5 | 0 | 7.9 | 14.6 | 20.4 |
| Viskosität (25 °C)³ | | 2.24 | 2.87 | 3.18 | 2.58 | 2.83 | 3.11 | 3.44 |
| Topfzeit [min] | | 75 | 70 | 60 | 80 | 80 | 85 | 90 |
| Ausbreitmass [cm] | | 20.1 | 21.0 | 20.6 | 19.6 | 19.8 | 21.7 | 20.5 |
| Zugfestigkeit [MPa] | | 4.8 | 5.1 | 5.7 | 0.9 | 0.9 | 0.9 | 1.1 |
| Bruchdehnung [%] | | 225 | 215 | 200 | 80 | 75 | 115 | 130 |
| E-Modul [MPa] | | 10.2 | 9.9 | 10.6 | 8.3 | 6.8 | 5.8 | 5.9 |
| Weiterreiss. [N/mm] | | 16.0 | 15.8 | 15.8 | 6.2 | 6.0 | 6.6 | 5.7 |
| Aspekt, Blasenbildung | | klebfrei, s.wenig | klebfrei, s.wenig | klebfrei, keine | klebfrei, s.wenig | klebfrei, s.wenig | klebfrei, keine | klebfrei, keine |

| | | | | | | | | |
|---|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ der Komponente-1 [Pa·s] | | | | | | | | |

**Tabelle 3: Zusammensetzung (in Gewichtstellen) und Eigenschaften von F-8 bis F-13 und Ref-8 und Ref-9. "n.b." steht für "nicht bestimmt" "s.wenig" steht für "sehr wenig"**

| **Flüssigfolie** | | ***Ref-8*** | ***F-8*** | ***F-9*** | ***F-10*** | ***F-11*** | ***Ref-9*** | ***F-12*** | ***F-13*** |
|---|---|---|---|---|---|---|---|---|---|
| **Komponente-1:** | | | | | | | | | |
| | Lupranol® 4003/1 | - | 10.00 | 30.00 | 10.00 | 30.00 | - | 10.00 | 10.00 |
| | Voranol® CP 4755 | 46.85 | 41.35 | 30.35 | 34.12 | 23.12 | 46.82 | 41.32 | 21.29 |
| | Rizinusöl | - | - | - | - | - | - | - | 20.00 |
| | 1,4-Butandiol | 2.72 | 2.72 | 2.72 | 1.92 | 1.92 | 2.72 | 2.72 | 2.75 |
| | Aldimin-1 | 4.20 | 4.20 | 4.20 | 11.0 | 11.0 | 4.20 | 4.20 | 6.0 |
| | Aldimin-2 | 1.80 | 1.80 | 1.80 | - | - | 1.80 | 1.80 | - |
| | Quarzmehl | 44.00 | 39.50 | 30.50 | 36.50 | 27.50 | 44.00 | 39.50 | 39.50 |
| | Zeolith-Paste | - | - | - | 6.00 | 6.00 | - | - | - |
| | K-Kat® A-209¹ | - | - | - | 0.13 | 0.13 | 0.13 | 0.13 | 0.13 |
| | DBTDL | 0.10 | 0.10 | 0.10 | - | - | - | - | - |
| | Salicylsäure¹ | 0.33 | 0.33 | 0.33 | 0.33 | 0.33 | 0.33 | 0.33 | 0.33 |

| **Komponente-2:** | | | | | | | | | |
|---|---|---|---|---|---|---|---|---|---|
| Isonate® M 143 | | 16.00 | 16.00 | 16.00 | 16.00 | 16.00 | - | - | - |
| Desmodur® VH 20 N | | - | - | - | - | - | 19.0 | 19.0 | 28.0 |
| Polymer-Gehalt² | | 0 | 8.8 | 22.4 | 10.2 | 25.4 | 0 | 8.8 | 8.8 |
| Viskosität (25 °C)³ | | 2.24 | 2.05 | 2.64 | 2.38 | 2.89 | n.b. | n.b. | 1.95 |
| Topfzeit [min] | | 20 | 20 | 20 | >150 | >150 | 70 | 65 | 45 |
| Ausbreitmass [cm] | | 19.5 | 19.6 | 19.9 | 21.0 | 21.2 | 19.6 | 19.6 | 20.0 |
| Zugfestigkeit [MPa] | | 7.5 | 8.2 | 9.3 | 7.6 | 8.8 | 5.9 | 7.3 | 11.8 |
| Bruchdehnung [%] | | 210 | 195 | 200 | 275 | 240 | 220 | 245 | 145 |
| E-Modul [MPa] | | 14.1 | 13.7 | 13.7 | 11.8 | 11.8 | 11.3 | 12.8 | 18.2 |
| Weiterreiss. [N/mm] | | 13.2 | 13.1 | 13.1 | 12.3 | 12.7 | 13.3 | 14.4 | 14.3 |
| Aspekt, Blasenbildung | | klebfrei, wenig | klebfrei, wenig | klebfrei, wenig | klebfrei, keine | klebfrei, keine | klebfrei, s.wenig | klebfrei, s.wenig | klebfrei, s.wenig |

| | | | | | | | | | |
|---|---|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ der Komponente-1 [Pa·s] | | | | | | | | | |

**Tabelle 4: Zusammensetzung (in Gewichtsteilen) und Eigenschaften von F-14 bis F-19 und Ref-10 und Ref-11. "s.wenig" steht für "sehr wenig"**

| **Flüssigfolie** | | ***Ref-10*** | ***F-14*** | ***F-15*** | ***F-16*** | ***Ref-11*** | ***F-17*** | ***F-18*** | ***F-19*** |
|---|---|---|---|---|---|---|---|---|---|
| **Komponente-1:** | | | | | | | | | |
| | Lupranol® 4003/1 | - | 10.00 | 20.00 | 30.00 | - | 10.00 | 20.00 | 30.00 |
| | Voranol® CP 4755 | 49.01 | 43.53 | 38.03 | 32.53 | 46.79 | 41.29 | 35.79 | 30.29 |
| | 1,4-Butandiol | 3.01 | 3.01 | 3.01 | 3.01 | 2.75 | 2.75 | 2.75 | 2.75 |
| | Aldimin-1 | 3.50 | 3.50 | 3.50 | 3.50 | 6.00 | 6.00 | 6.00 | 6.00 |
| | Quarzmehl | 44.00 | 39.50 | 35.00 | 30.50 | 44.00 | 39.50 | 35.00 | 30.50 |
| | K-Kat® A-209¹ | 0.13 | 0.13 | 0.13 | 0.13 | 0.13 | 0.13 | 0.13 | 0.13 |
| | Salicylsäure¹ | 0.33 | 0.33 | 0.33 | 0.33 | 0.33 | 0.33 | 0.33 | 0.33 |

| **Komponente-2:** | | | | | | | | | |
|---|---|---|---|---|---|---|---|---|---|
| Desmodur® VH 20 N | | 19.0 | 19.0 | 19.0 | 19.0 | 19.0 | 19.0 | 19.0 | 19.0 |
| Polymer-Gehalt² | | 0 | 8.4 | 15.5 | 21.6 | 0 | 8.8 | 16.1 | 22.4 |
| Topfzeit [min] | | >95 | 80 | 85 | 85 | 75 | 75 | 80 | 80 |
| Ausbreitmass [cm] | | 19.5 | 19.4 | 20.3 | 20.4 | 19.7 | 19.9 | 20.3 | 20.3 |
| Zugfestigkeit [MPa] | | 5.0 | 6.0 | 6.6 | 7.0 | 5.9 | 6.7 | 7.4 | 8.1 |
| Bruchdehnung [%] | | 260 | 255 | 250 | 225 | 260 | 270 | 240 | 230 |
| E-Modul [MPa] | | 13.9 | 13.0 | 11.9 | 12.7 | 12.9 | 12.9 | 13.5 | 13.2 |
| Weiterreiss. [N/mm] | | 15.2 | 14.9 | 14.0 | 14.0 | 14.8 | 14.7 | 14.7 | 14.2 |
| Aspekt, Blasenbildung | | klebfrei, s.wenig | klebfrei, s.wenig | klebfrei, s.wenig | klebfrei, s.wenig | klebfrei, s.wenig | klebfrei, s.wenig | klebfrei, s.wenig | klebfrei, s.wenig |

| | | | | | | | | | |
|---|---|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] | | | | | | | | | |

**Tabelle 5: Zusammensetzung (in Gewichtsteilen) und Eigenschaften von F-20 bis F-26 und Ref-12. "n.b." steht für "nicht bestimmt" "s.wenig" steht für "sehr wenig"**

| **Flüssigfolie** | | ***Ref-12*** | ***F-20*** | ***F-21*** | ***F-22*** | ***F-23*** | ***F-24*** | ***F-25*** | ***F-26*** |
|---|---|---|---|---|---|---|---|---|---|
| **Komponente-1:** | | | | | | | | | |
| | Lupranol® 4003/1 | - | 10.00 | 30.00 | - | - | - | - | - |
| | Desmophen® 5028 GT | - | - | - | 22.50 | 45.00 | 22.50 | 45.00 | 22.50 |
| | Voranol® CP 4755 | 42.26 | 36.85 | 25.85 | 28.79 | 10.79 | 26.54 | 8.54 | 24.29 |
| | 1,4-Butandiol | 2.28 | 2.28 | 2.28 | 2.75 | 2.75 | 2.50 | 2.50 | 2.25 |
| | Aldimin-1 | 11.0 | 11.0 | 11.0 | 6.00 | 6.00 | 8.50 | 8.50 | 11.00 |
| | Quarzmehl | 44.00 | 39.50 | 30.50 | 39.50 | 35.0 | 39.50 | 35.0 | 39.50 |
| | K-Kat® A-209¹ | 0.13 | 0.13 | 0.13 | 0.13 | 0.13 | 0.13 | 0.13 | 0.13 |
| | Salicylsäure¹ | 0.33 | 0.33 | 0.33 | 0.33 | 0.33 | 0.33 | 0.33 | 0.33 |

| **Komponente-2:** | | | | | | | | | |
|---|---|---|---|---|---|---|---|---|---|
| Desmodur® VH 20 N | | 19.0 | 19.0 | 19.0 | - | - | - | - | - |
| Isonate® M 143 | | - | - | - | 16.00 | 16.00 | 16.00 | 16.00 | 16.00 |
| Polymer-Gehalt² | | 0 | 9.6 | 24.2 | 8.8 | 16.1 | 9.2 | 16.8 | 9.6 |
| Viskosität (25 °C)³ | | n.b. | n.b. | n.b. | 3.34 | 5.17 | 2.93 | 4.67 | 3.17 |
| Topfzeit [min] | | 80 | 90 | 80 | 70 | 60 | 65 | 60 | 70 |
| Ausbreitmass [cm] | | 20.2 | 20.1 | 20.2 | 20.2 | 19.8 | 20.8 | 20.6 | 20.6 |
| Zugfestigkeit [MPa] | | 6.6 | 7.5 | 9.7 | 4.2 | 5.2 | 5.2 | 6.1 | 6.7 |
| Bruchdehnung [%] | | 250 | 245 | 245 | 215 | 195 | 225 | 205 | 215 |
| E-Modul [MPa] | | 11.4 | 12.9 | 10.0 | 11.5 | 13.5 | 12.1 | 14.8 | 15.6 |
| Weiterreiss. [N/mm] | | 15.2 | 15.4 | 15.4 | 13.8 | 13.8 | 14.2 | 14.3 | 15.1 |
| Aspekt, Blasenbildung | | klebfrei, s.wenig | klebfrei, s.wenig | klebfrei, s.wenig | klebfrei, wenig | klebfrei, wenig | klebfrei, wenig | klebfrei, wenig | klebfrei, s.wenig |

| | | | | | | | | | |
|---|---|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ der Komponente-1 [Pa·s] | | | | | | | | | |

## Patentansprüche

1. Zusammensetzung bestehend aus
einer ersten Komponente enthaltend
- mindestens ein Polymer-Polyol, welches eine Dispersion eines bei Raumtemperatur festen Polymers in einem bei Raumtemperatur flüssigen Polyetherpolyol ist,
- mindestens einen Diol-Kettenverlängerer
- und gegebenenfalls weitere Polyole,
und einer zweite Komponente enthaltend Diphenylmethandiisocyanat; wobei mindestens eine der beiden Komponenten zusätzlich mindestens ein Aldimin der Formel (I) enthält, 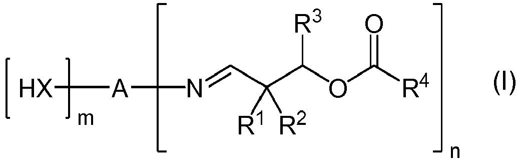 wobei
A für einen (m+n)-wertigen, gegebenenfalls Ethereinheiten enthaltenden, Kohlenwasserstoff-Rest mit 2 bis 20 C-Atomen steht,
X für O oder N-R⁵ steht,
R¹ und R² unabhängig voneinander jeweils für einen einwertigen Kohlenwasserstoff-Rest mit 1 bis 12 C-Atomen stehen, oder zusammen für einen zweiwertigen Kohlenwasserstoff-Rest mit 4 bis 12 C-Atomen stehen, welcher Teil eines, gegebenenfalls substituierten, carbocyclischen Rings mit 5 bis 8, bevorzugt 6, C-Atomen ist;
R³ für ein Wasserstoffatom oder für einen Alkyl- oder Arylalkyl- oder Alkoxycarbonyl-Rest mit 1 bis 12 C-Atomen steht;
R⁴ für einen einwertigen, gegebenenfalls Ether- oder Aldehydeinheiten enthaltenden Kohlenwasserstoff-Rest mit 6 bis 20 C-Atomen steht;
R⁵ für einen einwertigen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder eine Gruppe der Formel 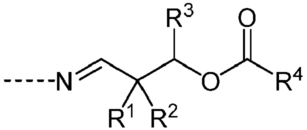 aufweist; und
m für 0 oder 1 und n für 1 oder 2 oder 3 steht, mit der Massgabe, dass m+n für 2 oder 3 steht.

2. Zusammensetzung gemäss Anspruch 1, **dadurch gekennzeichnet, dass** das Aldimin der Formel (I) ausgewählt ist aus der Gruppe bestehend aus N,N'-Bis(2,2-dimethyl-3-lauroyloxypropyliden)-hexamethylen-1,6-diamin, N,N'-Bis(2,2-dimethyl-3-lauroyloxypropyliden)-3-aminomethyl-3,5,5-trimethylcyclohexylamin, N-2,2-Dimethyl-3-lauroyloxypropyliden-2-(2-amino-ethoxy)ethanol, N,N'-Bis(2,2-dimethyl-3-lauroyloxypropylidene)polyoxy-propylendiamin mit einem mittleren Molekulargewicht im Bereich von 710 bis 810 g/mol und N,N',N"-Tris(2,2-dimethyl-3-lauroyloxypropyliden)polyoxypropylenetriamin mit einem mittleren Molekulargewicht im Bereich von 1'190 bis 1'290 g/mol.

3. Zusammensetzung gemäss einem der vorhergehenden Ansprüche, **dadurch gekennzeichnet, dass** das feste Polymer ein Copolymer von Acrylnitril und Styrol (SAN) oder ein Polyharnstoff bzw. Polyhydrazodicarbonamid (PHD) oder ein Polyurethan ist.

4. Zusammensetzung gemäss einem der vorhergehenden Ansprüche, **dadurch gekennzeichnet, dass** das Polyetherpolyol ein Ethylenoxid-terminiertes Polyoxypropylentriol mit einem Molekulargewicht im Bereich von 1000 bis 6000 g/mol ist.

5. Zusammensetzung gemäss einem der vorhergehenden Ansprüche, **dadurch gekennzeichnet, dass** der Diol-Kettenverlängerer ausgewählt ist aus der Gruppe bestehend aus 1,2-Ethandiol, 1,2-Propandiol, 1,3-Propandiol, 1,2-Butandiol, 1,3-Butandiol, 1,4-Butandiol, 2,3-Butandiol, 2-Methyl-1,3-propandiol, 1,5-Pentandiol, 1,2-Pentandiol, 2,4-Pentandiol, 2-Methyl-1,4-pentandiol, 2,2-Dimethyl-1,3-propandiol, 1,6-Hexandiol, 1,2-Hexandiol, 3-Methyl-1,5-pentandiol, 1,8-Octandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol, 1,4-Cyclohexandimethanol, Diethylenglykol und Dipropylenglykol.

6. Zusammensetzung gemäss einem der vorhergehenden Ansprüche, **dadurch gekennzeichnet, dass** die Zusammensetzung mindestens ein weiteres Polyol, welches ein Polyetherpolyol oder ein Poly(meth)acrylatpolyol oder ein polyhydroxyfunktionelles Fett oder Öl ist, enthält.

7. Zusammensetzung gemäss einem der vorhergehenden Ansprüche, **dadurch gekennzeichnet, dass** der Anteil an festem Polymer aus dem Polymer-Polyol bezogen auf die Summe aus Polymer-Polyol und gegebenenfalls vorhandenen weiteren Polyolen im Bereich von 5 bis 30 Gewichts-% liegt.

8. Zusammensetzung gemäss einem der vorhergehenden Ansprüche, **dadurch gekennzeichnet, dass** die zweite Komponente einen Gehalt an Diphenylmethandiisocyanat im Bereich von 20 bis 100 Gewichts-% aufweist.

9. Zusammensetzung gemäss einem der vorhergehenden Ansprüche, **dadurch gekennzeichnet, dass** mindestens eine der beiden Komponenten zusätzlich eine Zirkonium(IV)-Verbindung als Katalysator enthält.

10. Zusammensetzung gemäss einem der vorhergehenden Ansprüche, **dadurch gekennzeichnet, dass** sie im Wesentlichen frei von leichtflüchtigen Lösemitteln ist.

11. Zusammensetzung gemäss einem der vorhergehenden Ansprüche, **dadurch gekennzeichnet, dass** sie eine Minute nach dem Vermischen der beiden Komponenten eine Viskosität bei 25 °C im Bereich von 0.5 bis 2 Pa·s aufweist.

12. Verwendung einer Zusammensetzung gemäss einem der Ansprüche 1 bis 11 als Beschichtung oder Abdichtung.

13. Verwendung gemäss Anspruch 12 in einem Bodenbeschichtungssystem, umfassend
- gegebenenfalls einen Primer und/oder eine Grundierung und/oder eine Reperatur- oder Nivelliermasse,
- mindestens eine Schicht der in den Ansprüchen 1 bis 11 beschriebenen Zusammensetzung, wobei diese definiert oder überschüssig mit Quarzsand oder anderen Aggregaten abgestreut sein kann,
- gegebenenfalls eine Deckbeschichtung, welche definiert oder überschüssig mit Quarzsand oder anderen Aggregaten abgestreut sein kann, und
- eine Versiegelung.

14. Verwendung gemäss Anspruch 12 in einem Dachabdichtungssystem, umfassend
- gegebenenfalls einen Primer und/oder eine Grundierung und/oder eine Reparatur- oder Nivelliermasse,
- mindestens eine Schicht der beschriebenen Zusammensetzung in einer Schichtdicke von 0.5 bis 5 mm,
- gegebenenfalls eine Deckbeschichtung, und
- gegebenenfalls eine Versiegelung.

15. Ausgehärtete Zusammensetzung, erhalten aus einer Zusammensetzung gemäss einem der Ansprüche 1 bis 11 nach dem Vermischen der beiden Komponenten und deren Aushärtung.

## Claims

1. A composition composed of
a first component comprising
- at least one polymer polyol which is a dispersion of a polymer that is solid at room temperature in a polyether polyol that is liquid at room temperature,
- at least one diol chain extender
- and optionally other polyols;
and a second component comprising diphenylmethane diisocyanate; where at least one of the two components additionally comprises at least one aldimine of the formula (I), 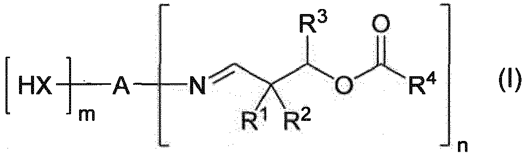 where
A is an (m+n)-valent hydrocarbon moiety which optionally comprises ether units and which has from 2 to 20 C atoms,
X is O or N-R⁵,
R¹ and R² are mutually independently respectively a monovalent hydrocarbon moiety having from 1 to 12 C atoms, or together are a divalent hydrocarbon moiety which has from 4 to 12 C atoms and which is part of an optionally substituted carbocyclic ring having from 5 to 8, preferably 6, C atoms;
R³ is a hydrogen atom or is an alkyl or arylalkyl or alkoxycarbonyl moiety having from 1 to 12 C atoms;
R⁴ is a monovalent hydrocarbon moiety which has from 6 to 20 C atoms and which optionally comprises ether units or aldehyde units;
R⁵ is a monovalent hydrocarbon moiety which has from 1 to 30 C atoms and which optionally comprises at least one carboxylic ester group, nitrile group, nitro group, phosphonic ester group, sulfonic group or sulfonic ester group, or a group of the formula 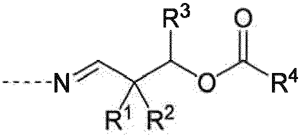 ; and
m is 0 or 1, and n is 1 or 2 or 3, with the proviso that m+n is 2 or 3.

2. The composition as claimed in claim 1, **characterized in that** the aldimine of the formula (I) is selected from the group consisting of N,N'-bis(2,2-dimethyl-3-lauroyloxypropylidene)hexamethylene-1,6-diamine, N,N'-bis(2,2-dimethyl-3-lauroyloxypropylidene)-3-aminomethyl-3,5,5-trime-thylcyclohexylamine, N-2,2-dimethyl-3-lauroyloxypropylidene-2-(2-amino-ethoxy)ethanol, N,N'-bis(2,2-dimethyl-3-lauroyloxypropylidene)polyoxy-propylenediamine with average molecular weight in the range from 710 to 810 g/mol and N,N',N"-tris(2,2-dimethyl-3-lauroyloxypropylidene)polyoxypropylenetriamine with average molecular weight in the range from 1190 to 1290 g/mol.

3. The composition as claimed in any of the preceding claims, **characterized in that** the solid polymer is a copolymer of acrylonitrile and styrene (SAN) or is a polyurea/polyhydrazodicarbonamide (PHD) or is a polyurethane.

4. The composition as claimed in any of the preceding claims, **characterized in that** the polyether polyol is an ethylene-oxide-terminated polyoxypropylenetriol with molecular weight in the range from 1000 to 6000 g/mol.

5. The composition as claimed in any of the preceding claims, **characterized in that** the diol chain extender is selected from the group consisting of 1,2-ethanediol, 1,2-propanediol, 1,3-propanediol, 1,2-butanediol, 1,3-butanediol, 1,4-butanediol, 2,3-butanediol, 2-methyl-1,3-propanediol, 1,5-pentanediol, 1,2-pentanediol, 2,4-pentanediol, 2-methyl-1,4-pentanediol, 2,2-dimethyl-1,3-propanediol, 1,6-hexanediol, 1,2-hexanediol, 3-methyl-1,5-pentanediol, 1,8-octanediol, 1,2-octanediol, 3,6-octanediol, 2-ethyl-1,3-hexanediol, 2,2,4-trimethyl-1,3-pentanediol, 2-butyl-2-ethyl-1,3-propanediol, 2,7-dimethyl-3,6-octanediol, 1,4-cyclohexanediol, 1,3-cyclohexanedimethanol, 1,4-cyclohexanedimethanol, diethylene glycol and dipropylene glycol.

6. The composition as claimed in any of the preceding claims, **characterized in that** the composition comprises at least one other polyol which is a polyether polyol or a poly(meth)acrylate polyol or which is a polyhydroxyfunctional fat or oil.

7. The composition as claimed in any of the preceding claims, **characterized in that** the proportion of solid polymer from the polymer polyol, based on the entirety of polymer polyol and optionally present other polyols, is in the range from 5 to 30% by weight.

8. The composition as claimed in any of the preceding claims, **characterized in that** the content of diphenylmethane diisocyanate in the second component is in the range from 20 to 100% by weight.

9. The composition as claimed in any of the preceding claims, **characterized in that** at least one of the two components additionally comprises a zirconium(IV) compound as catalyst.

10. The composition as claimed in any of the preceding claims, **characterized in that** it is in essence free from volatile solvents.

11. The composition as claimed in any of the preceding claims, **characterized in that** its viscosity one minute after mixing of the two components is in the range from 0.5 to 2 Pa·s at 25°C.

12. The use of a composition as claimed in any of claims 1 to 11 as coating or seal.

13. The use as claimed in claim 12 in a floor-coating system comprising
- optionally a primer and/or a priming coat, and/or a repair composition or leveling composition,
- at least one layer of the composition described in claims 1 to 11, onto which a defined quantity of, or an excess of, quartz sand or other aggregates can have been scattered,
- optionally a topcoat, onto which a defined quantity of, or an excess of, quartz sand or other aggregates can have been scattered, and
- a sealing system.

14. The use as claimed in claim 12 in a roof-sealing system comprising
- optionally a primer and/or a priming coat, and/or a repair composition or leveling composition,
- at least one layer of thickness from 0.5 to 5 mm of the composition described,
- optionally a topcoat, and
- optionally a sealing system.

15. A hardened composition obtained from a composition as claimed in any of claims 1 to 11 after mixing of the two components and hardening thereof.

## Revendications

1. Composition constituée par :
un premier composant contenant :
- au moins un polymère-polyol, qui est une dispersion d'un polymère solide à température ambiante dans un polyéther-polyol liquide à température ambiante,
- au moins un allongeur de chaînes diol,
- et éventuellement d'autres polyols ;
et un deuxième composant contenant du diisocyanate de diphénylméthane ;
au moins un des deux composants contenant en outre au moins une aldimine de formule (I) 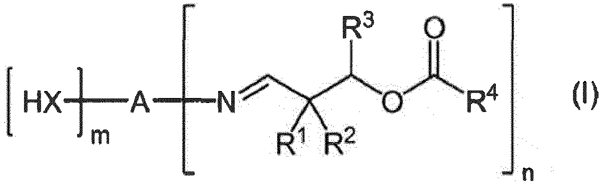 dans laquelle
A représente un radical hydrocarboné (m+n)-valent, contenant éventuellement des unités éther, de 2 à 20 atomes C,
X représente O ou N-R⁵,
R¹ et R² représentent chacun indépendamment l'un de l'autre un radical hydrocarboné monovalent de 1 à 12 atomes C, ou représentent ensemble un radical hydrocarboné bivalent de 4 à 12 atomes C, qui fait partie d'un cycle carbocyclique éventuellement substitué, de 5 à 8, de préférence 6, atomes C ;
R³ représente un atome d'hydrogène ou un radical alkyle ou arylalkyle ou alcoxycarbonyle de 1 à 12 atomes C ;
R⁴ représente un radical hydrocarboné monovalent, contenant éventuellement des unités éther ou aldéhyde, de 6 à 20 atomes C,
R⁵ représente un radical hydrocarboné monovalent de 1 à 30 atomes C, qui comprend éventuellement au moins un groupe ester d'acide carboxylique, nitrile, nitro, ester d'acide phosphonique, sulfone ou ester d'acide sulfonique ou un groupe de formule 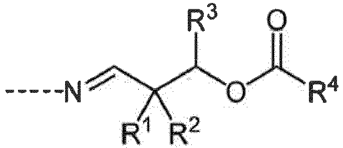 ; et
m représente 0 ou 1 et n 1 ou 2 ou 3, à condition que m+n représente 2 ou 3.

2. Composition selon la revendication 1, **caractérisée en ce que** l'aldimine de formule (I) est choisie dans le groupe constitué par la N,N'-bis(2,2-diméthyl-3-lauroyloxypropylidène)-hexaméthylène-1,6-diamine, la N,N'-bis(2,2-diméthyl-3-lauroyloxypropylidène)-3-aminométhyl-3,5,5-triméthylcyclohexylamine, le N-2,2-diméthyl-3-lauroyloxypropylidène-2-(2-amino-éthoxy)éthanol, la N,N'-bis(2,2-diméthyl-3-lauroyloxypropylidène)polyoxy-propylène-diamine ayant un poids moléculaire moyen dans la plage allant de 710 à 810 g/mol et la N,N',N" -tris(2,2-diméthyl-3-lauroyloxypropylidène)polyoxypropylène-triamine ayant un poids moléculaire moyen dans la plage allant de 1 190 à 1 290 g/mol.

3. Composition selon l'une quelconque des revendications précédentes, **caractérisée en ce que** le polymère solide est un copolymère d'acrylonitrile et de styrène (SAN) ou une polyurée ou un polyhydrazodicarbonamide (PHD) ou un polyuréthane.

4. Composition selon l'une quelconque des revendications précédentes, **caractérisée en ce que** le polyéther-polyol est un polyoxypropylène-triol à terminaison oxyde d'éthylène ayant un poids moléculaire dans la plage allant de 1 000 à 6 000 g/mol.

5. Composition selon l'une quelconque des revendications précédentes, **caractérisée en ce que** l'allongeur de chaînes diol est choisi dans le groupe constitué par le 1,2-éthane-diol, le 1,2-propane-diol, le 1,3-propane-diol, le 1,2-butane-diol, le 1,3-butane-diol, le 1,4-butane-diol, le 2,3-butane-diol, le 2-méthyl-1,3-propane-diol, le 1,5-pentane-diol, le 1,2-pentane-diol, le 2,4-pentane-diol, le 2-méthyl-1,4-pentane-diol, le 2,2-diméthyl-1,3-propane-diol, le 1,6-hexane-diol, le 1,2-hexane-diol, le 3-méthyl-1,5-pentane-diol, le 1,8-octane-diol, le 1,2-octane-diol, le 3,6-octane-diol, le 2-éthyl-1,3-hexane-diol, le 2,2,4-triméthyl-1,3-pentane-diol, le 2-butyl-2-éthyl-1,3-propane-diol, le 2,7-diméthyl-3,6-octane-diol, le 1,4-cyclohexane-diol, le 1,3-cyclohexane-diméthanol, le 1,4-cyclohexane-diméthanol, le diéthylène glycol et le dipropylène glycol.

6. Composition selon l'une quelconque des revendications précédentes, **caractérisée en ce que** la composition contient au moins un polyol supplémentaire, qui est un polyéther-polyol ou un poly(méth)acrylate-polyol ou une graisse ou une huile à fonction polyhydroxy.

7. Composition selon l'une quelconque des revendications précédentes, **caractérisée en ce que** la proportion de polymère solide du polymère-polyol, par rapport à la somme du polymère-polyol et des polyols supplémentaires éventuellement présents se situe dans la plage allant de 5 à 30 % en poids.

8. Composition selon l'une quelconque des revendications précédentes, **caractérisée en ce que** le deuxième composant présente une teneur en diisocyanate de diphénylméthane dans la plage allant de 20 à 100 % en poids.

9. Composition selon l'une quelconque des revendications précédentes, **caractérisée en ce qu'**au moins un des deux composants contient en outre un composé de zirconium (IV) en tant que catalyseur.

10. Composition selon l'une quelconque des revendications précédentes, **caractérisée en ce qu'**elle est essentiellement exempte de solvants volatils.

11. Composition selon l'une quelconque des revendications précédentes, **caractérisée en ce qu'**elle présente une viscosité à 25 °C une minute après le mélange des deux composants dans la plage allant de 0,5 à 2 Pa·s.

12. Utilisation d'une composition selon l'une quelconque des revendications 1 à 11 en tant que revêtement ou agent d'étanchéité.

13. Utilisation selon la revendication 12 dans un système de revêtement de sol, comprenant :
- éventuellement une couche primaire et/ou une couche de base et/ou un matériau de réparation ou de nivelage,
- au moins une couche de la composition décrite dans les revendications 1 à 11, celle-ci pouvant être sablée de manière définie ou excédentaire avec du sable quartzeux ou d'autres agrégats,
- éventuellement un revêtement supérieur, qui peut être sablé de manière définie ou excédentaire avec du sable quartzeux ou d'autres agrégats, et
- un enduit de scellement.

14. Utilisation selon la revendication 12 dans un système d'étanchéification de toit, comprenant :
- éventuellement une couche primaire et/ou une couche de base et/ou un matériau de réparation ou de nivelage,
- au moins une couche de la composition décrite en une épaisseur de couche de 0,5 à 5 mm,
- éventuellement un revêtement supérieur, et
- éventuellement un enduit de scellement.

15. Composition durcie, obtenue à partir d'une composition selon l'une quelconque des revendications 1 à 11 après le mélange des deux composants et leur durcissement.
